# EUROPEAN PATENT APPLICATION

(11) **EP 0 597 479 A2**
(43) Date of publication of application: **18.05.1994**
(21) Application number: 93118307.3
(22) Date of filing: 11.11.1993
(51) Int. Cl.: G11B 19/20, F16C 17/10

(54) **Magnetic disk drive spindle motor**

(30) Priority: 12.11.1992 JP 327441/92
(71) Applicant: NEC CORPORATION, Tokyo (JP)
(72) Inventor: Sanada, Yotaro, c/o NEC Corporation, Tokyo (JP)
(74) Representative: VOSSIUS & PARTNER

(57) **Abstract**

A magnetic disk drive spindle motor includes a fixed shaft, a spindle hub, a sleeve member, and a pair of bearing members. The spindle hub is rotatably arranged on the peripheral surface side of the fixed shaft, and supports a magnetic disk. The sleeve member is interposed between the fixed shaft and the spindle hub and rotated together with the spindle hub, and forms a first hydrodynamic bearing surface in a radial direction between the sleeve and the peripheral surface of the fixed shaft. The pair of bearing members are respectively fixed at both end portions of the fixed shaft, and form second hydrodynamic bearing surfaces in a thrust direction between the pair of bearing members and both end faces of the sleeve member.

## Description

The present invention relates to a magnetic disk drive spindle motor and, more particularly, to a magnetic disk drive spindle motor which can effectively avoid vibrations even if a plurality of magnetic disks are mounted in a magnetic disk drive.

A conventional magnetic disk spindle motor generally uses a rolling bearing in its bearing portion. With the high speed operation and high density of magnetic disk drives in recent years, a hydrodynamic bearing has been employed in place of the rolling bearing.

Japanese Patent Laid-Open Nos. 3-14906 and 62-140271, for example, disclose examples of such a magnetic disk drive spindle motor using a hydrodynamic bearing.

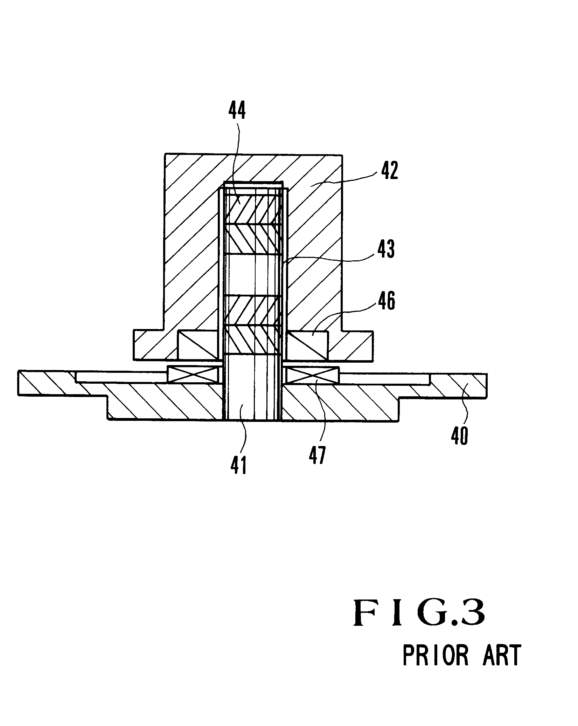

Fig. 3 shows the schematic arrangement of a spindle motor using a hydrodynamic bearing. Referring to Fig. 3, a housing 40 is fixed on a base (not shown) of a magnetic disk drive through screws. A shaft 41 is rotatably supported at a position where the shaft extends through the housing, and a spindle hub 42 is arranged on the peripheral surface of the shaft 41.

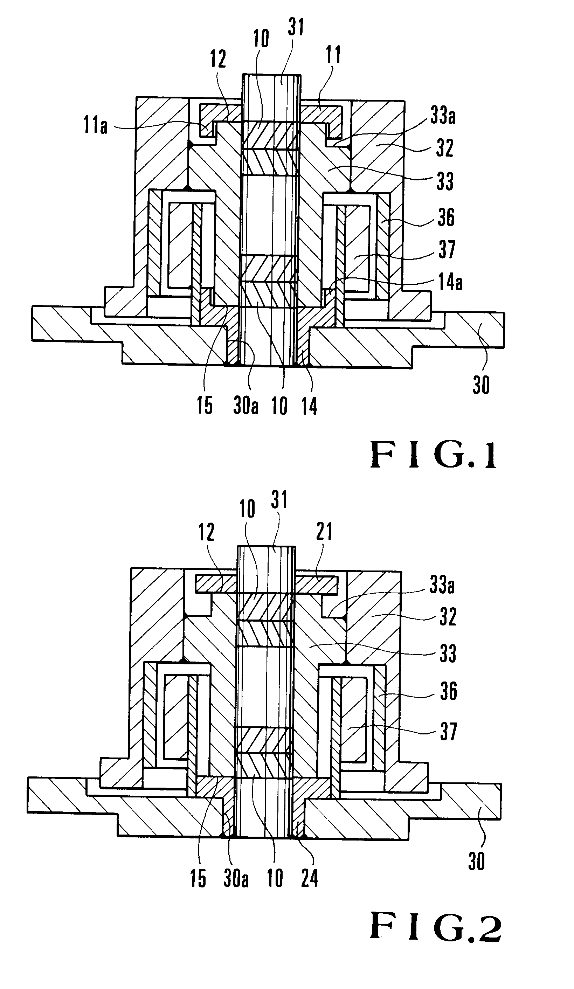

A sleeve 43 is interposed between the spindle hub 42 and the shaft 41, and a radial bearing surface 44 is formed between the sleeve 43 and the shaft 41. Note that, in Fig. 2, reference numeral 46 denotes a magnet fixed on the spindle hub 42; and 47, an armature.

However, in the above magnetic disk drive spindle motor, since the shaft 41 is rotated, non- reproducible vibrations can be reduced, but reproducible vibrations are disadvantageously increased due to the swinging movement or the like of the shaft 41. In particular, when the number of magnetic disks to be mounted is increased, this disadvantage becomes conspicuous.

On the other hand, a magnetic disk drive spindle motor using a fixed shaft is disclosed in Japanese Patent Laid-Open No. 1-276465. However, according to this arrangement, support in both directions, i.e., thrust and radial directions, is not performed, and the satisfactory prevention of vibrations cannot always be disadvantageously expected.

That is, media for storing information are stacked and mounted on the spindle hub. In a magnetic disk drive in which one, two, or three media each having a diameter of 3.5" or less are stacked, although a structure having a cantilevered shaft is sometimes used, a ball bearing having high rigidity is used as a bearing. In a magnetic disk drive having the same structure as described above, when a hydrodynamic bearing is used in a bearing portion, vibrations generally called a swinging phenomenon easily occurs because the rigidity of the hydrodynamic bearing is very lower than that of a ball bearing (especially, conical rigidity for supporting a rotating portion on a shaft in a direction perpendicular to the shaft is low). For this reason, this causes "galling" and "seizing" between the rotating and fixed portions of the hydrodynamic bearing. (Since a clearance between the rotating portion and the fixed portion of the hydrodynamic bearing is several /1.m to several tens /1.m, the "galling" or "seizing" is a fatal disadvantage.)

It is an object of the present invention to provide a magnetic disk drive spindle motor which is free from vibrations in the thrust direction of magnetic disks.

It is another object of the present invention to provide a magnetic disk drive spindle motor capable of assuring good load resistance characteristics when a plurality of magnetic disks are mounted.

In order to achieve the above objects, according to the present invention, there is provided a magnetic disk drive spindle motor comprising a fixed shaft, a spindle hub, rotatably arranged on a peripheral surface side of the fixed shaft, for supporting a magnetic disk, a sleeve member, interposed between the fixed shaft and the spindle hub and rotated together with the spindle hub, for forming a first hydrodynamic bearing surface in a radial direction between the sleeve and a peripheral surface of the fixed shaft, and a pair of bearing members, respectively fixed at both end portions of the fixed shaft, for forming second hydrodynamic bearing surfaces in a thrust direction between the pair of bearing members and both end faces of the sleeve member.

Embodiments of the present invention will be described below with reference to the accompanying drawings.
Fig. 1 is a sectional view showing a magnetic disk drive spindle motor according to an embodiment of the present invention;
Fig. 2 is a sectional view showing a magnetic disk drive spindle motor according to another embodiment of the present invention; and
Fig. 3 is a sectional view showing a conventional magnetic disk drive spindle motor.

Fig 1 shows a magnetic disk drive spindle motor according to an embodiment of the present invention. Referring to Fig. 1, reference numeral 30 denotes a housing fixed on a base (not shown) of the magnetic disk drive; 31, a fixed shaft extending through the housing 30; and 32, a spindle hub arranged to surround the peripheral surface of the fixed shaft 31 at an interval. The spindle hub 32 is rotatably arranged with respect to the fixed shaft 31. A sleeve 33 which is fitted on the inner peripheral surface of the spindle hub 32 to be rotated together with the spindle hub 32 is arranged between the fixed shaft 31 and the spindle hub 32. This sleeve 33 is arranged to have a shape having a flange portion 33a projecting in the peripheral direction and formed at the peripheral portion of the sleeve 33 near the upper end of the sleeve 33, and the peripheral surface of the flange portion 33a is fitted in the inner peripheral surface of the spindle hub 32.

Radial bearing surfaces 10 constituting hydrodynamic bearing surfaces in the radial direction are formed at two portions, i.e., upper and lower positions between the sleeve 33 and the fixed shaft 31. Each of the radial bearing surfaces 10 is filled with a lubricating fluorine-based grease. When a spindle motor is rotated, a pressure is generated by the grease, and each of the radial bearing surfaces 10 effectively functions as a bearing.

A flange 11 is arranged on the upper peripheral surface of the fixed shaft 31. The peripheral edge of the flange 11 has a shape having a downwardly extended portion 11 a toward the flange portion 33a of the sleeve 33, and a thrust bearing surface 12 constituting a hydrodynamic bearing surface in a thrust direction is formed between the lower surface of the flange 11 and the upper end face of the sleeve 33 in the inner region of the downwardly extended portion 11 a. In this case, the thrust bearing surface 12 is filled with a grease like the above- mentioned radial bearing surfaces 10.

On the other hand, an end cap 14 is arranged on the lower peripheral surface of the fixed shaft 31. The lower half portion of this end cap 14 is inserted in a hole 30a formed in the housing 30, and the peripheral edge of the upper half portion has an upwardly extended portion 14a toward the flange portion 33a of the sleeve 33. A thrust bearing surface 15 serving as a hydrodynamic bearing surface and cooperating with the thrust bearing surface 12 is formed between the upper surface of the end cap 14 and the lower end face of the sleeve 33 in the inner region of the upwardly extended portion 14a, and the thrust bearing surface 15 is filled with a grease.

In this case, although each bearing interval between the bearing surfaces 10, 12, and 15 is about 1 to 10 /1.m, this interval can be achieved by high-precision machining and assembling techniques.

In the spindle motor in this embodiment, a plurality of magnetic disks are stacked on each other and supported by the spindle hub 32, and the spindle hub 32 and the magnetic disks are rotated by the functions of a magnet 36 fixed on a step portion formed on the inner peripheral surface of the spindle hub 32 and an armature 37 supported by the end cap 14 to oppose the magnet 36. The magnet 36 and the armature 37 constitute a motor drive system.

Therefore, according to the above embodiment, since each of the bearing surfaces 10, 12, and 15 is filled with the grease, when the spindle motor is rotated, a fluid pressure is generated by the grease to cause these bearing surfaces to function as bearings. For this reason, each of the bearings has predetermined bearing rigidity, and a load generated by the plurality of magnetic disks mounted on the spindle hub 32 can be effectively supported.

The sleeve 33 is fitted on the fixed shaft 31, and the fixed shaft 31 is interposed between the flange 11 and the end cap 14. With this arrangement, a so-called swingable rotation phenomenon which can be observed when a shaft is cantilevered can be prevented. With the arrangement, high rigidity in a thrust direction can be obtained, and vibrations of the magnetic disks in the thrust direction can be minimized. From this reason, since the vibrations of the spindle motor in the thrust direction are generally larger than those in the radial direction, the effect obtained from this embodiment can be maximally enhanced.

In addition, since support in both directions, i.e., the radial and thrust directions, is performed, an effect of assuring rigidity in a conical direction, which rigidity is the lowest rigidity of the hydrodynamic bearing, can also be expected.

Note that the shapes of the flange 11, the end cap 14, and the sleeve 33 are not limited to the illustrated ones, and can be variously designed if the predetermined bearing surfaces can be formed.

Fig. 2 shows a magnetic disk drive spindle motor according to another embodiment of the present invention, and is different from Fig. 1 in that a flange 21 is formed on a disk having no downwardly extended portion and an end cap 24 is formed in a sleeve form having no upwardly extended portion. In the spindle motor with the above arrangement, as in Fig. 1, a fixed shaft 31 supports a rotating spindle hub 32 using bearing surfaces 10, 12, and 15 filled with a grease. According to this embodiment, since formation of the downwardly and upwardly extended portions is omitted, a flange 11 and an end cap 14 can be easily machined.

Note that, in the above embodiment, although both the downwardly extended portion 11 a of the flange 11 and the upwardly extended portion 14a of the end cap 14 which are shown in Fig. 1 are omitted, either one of the portions may be omitted.

A groove in a radial bearing surface and a groove in a thrust bearing surface may be formed at either one of the fixed portion and the rotating portion to obtain the same effect as described above, and the end cap may be arranged at either one of the upper and the lower portion of the shaft to obtain the same effect as described above because the positions of the grooves and the position of the end cap are dependent on the assembling methods of the manufacture of spindle motors.

According to the present invention arranged as described above, a radial bearing surface is arranged between a sleeve and a fixed shaft, and the shaft has a structure supported at both the ends of the shaft to form thrust bearing surfaces, thereby performing support in both the radial and thrust directions. For this reason, vibrations of magnetic disks can be effectively prevented, and load resistance characteristics can be assured when a plurality of magnetic disks are mounted. Therefore, a novel, excellent magnetic disk drive spindle motor can be provided.

## Claims

1. A magnetic disk drive spindle motor characterized by comprising:
a fixed shaft (31);
a spindle hub (32), rotatably arranged on a peripheral surface side of said fixed shaft, for supporting a magnetic disk;
a sleeve member (33), interposed between said fixed shaft and said spindle hub and rotated together with said spindle hub, for forming a first hydrodynamic bearing surface (10) in a radial direction between said sleeve and a peripheral surface of said fixed shaft; and
a pair of bearing members (11, 14, 21, 24), respectively fixed at both end portions of said fixed shaft, for forming second hydrodynamic bearing surfaces (15) in a thrust direction between said pair of bearing members and both end faces of said sleeve member.

2. A motor according to claim 1, wherein said pair of bearing members are constituted by a disk-like flange member (11, 21) fixed on an upper end portion of said fixed shaft and an end cap member (14, 24) having inner and outer peripheral surfaces which are respectively supported by a lower end portion of said fixed shaft and a housing.

3. A motor according to claim 2, wherein said flange member comprises a downwardly extended portion (11 a) at a peripheral edge of said flange member, said downwardly extended portion vertically extending downward along an outer peripheral surface of said sleeve member, and said second hydrodynamic bearing surface in the thrust direction is formed between a lower surface of said flange member and an upper end face of said sleeve member in an inner region of said downwardly extended portion.

4. A motor according to claim 2 or 3, wherein said end cap member comprises an upwardly extended portion (14a) at a peripheral edge of an upper surface of said end cap portion, said upwardly extended portion vertically extending upward along the outer peripheral surface of said sleeve member, and said second hydrodynamic bearing surface in the thrust direction is formed between an upper surface of said end cap member and a lower end face of said sleeve member in an inner region of said upwardly extended portion.

5. A motor according to any one of claims 1 to 4, wherein said first and second hydrodynamic bearing surfaces are filled with a grease, and a fluid pressure is generated on said first and second hydrodynamic bearing surfaces by the grease during rotation of said spindle hub.

6. A motor according to any one of claims 1 to 5, wherein said sleeve member comprises a projection portion (33a) projecting in a flange form from a part of said sleeve member except for both the end portions thereof to be fitted on an inner peripheral surface of said spindle hub, and parts of said pair of bearing members (11 a, 14a) and motor drive system members (36, 37) are arranged in a gap between the outer peripheral surface of said sleeve member and the inner peripheral surface of said spindle hub.
